# EUROPEAN PATENT APPLICATION

(11) **EP 1 100 282 A1**
(43) Date of publication of application: **16.05.2001**
(21) Application number: 99402743.1
(22) Date of filing: 04.11.1999
(51) Int. Cl.: H04Q 7/32, G06F 9/445

(54) **Transparent access to remote devices**

(71) Applicant: MOTOROLA SEMICONDUCTEURS S.A., 31023 Toulouse Cédex (FR)
(72) Inventor: Abdesselem, Ouelid, 31000 Toulouse (FR)
(74) Representative: Kopacz, William James

(57) **Abstract**

A method for providing for modification of software in a remote device normally connected to a network comprising embedding an identifier within the software, the identifier comprising an address of an update source. From time to time the remote device sends the embedded code over the network to the update source, the update source being responsive if an update is available. The remote device may be a cellular telephone and the update source is a server accessible through the cellular telephone network. The embedded code may be a telephone number of a server which contains the update source. The remote device sends the server telephone number automatically at predetermined time intervals, and the server responds to the remote device if an upgrade is available. A new embedded code representing a telephone number is included within the update and subsequent calls from the remote device are made to the new number.

## Description

### Field of the Invention

This invention relates to transparent access to remote devices. In particular it relates to a method for transparently modifying the software of a user device, at the request of the user device, if, and only if, such a modification is available.

### Background of the Invention

Digital devices, having a microprocessor or microcontroller as a component thereof, frequently have software directing the function of the hardware which is fully or partially modifiable by means of, for example, rewriting a portion of the software in an associated writeable memory such as EEPROM or flash memory.

The ability to modify the device software is desirable, and in fact essential, for the purpose of fixing software errors discovered after the product is sold or for providing new features not previously included in the original software. In the case of errors to be corrected, it would be very expensive, if even possible, to notify all the purchasers or users of the devices, and would further be an imposition on the users to return the devices to a service center to be updated.

Additionally, software frequently also contains data which may need to be updated from time to time. For example, the price list of goods carried by a sales representative, or current weather or traffic information used by a traveller.

In the case of devices which are normally or frequently connected to a communications network, it would be useful to be able to use the frequent network connection to aid in the reprogramming or updating of the device software.

For example, in the case of cellular telephones, it would be desirable to make the software modifications over the air through the cellular telephone network. Large numbers of cellular telephones, numbering in the millions of units, are sold each year. Once such devices are sold it is very difficult, if at all possible, for the manufacturer to be able to contact each user or owner of these devices to notify such users of desirable or necessary modifications to be made to the software of the telephone. The notification might be necessary to, for example, correct errors in the software or to upgrade the software to incorporate a new feature or to accommodate a system change.

Even if such users can be contacted, it is expensive to do so, and furthermore usually would require the user to send or bring the telephone to an authorizer repair facility to make the change.

### Summary of the Invention

The above difficulties can be ameliorated by providing for modification of software in a device normally connected to a network comprising causing the device to periodically send a request for a software update to an update source, the update source being responsive if a software update is available for the device.

### Brief Description of the Drawings

FIG.1 is a diagram of a system in accordance with the invention.
FIG. 2 is a description of the state machine in a cellular telephone in a system according to the invention.
FIG. 3 is a description of the state machine in a server containing a software update in a system in accordance with the invention.

### Description of the Preferred Embodiment

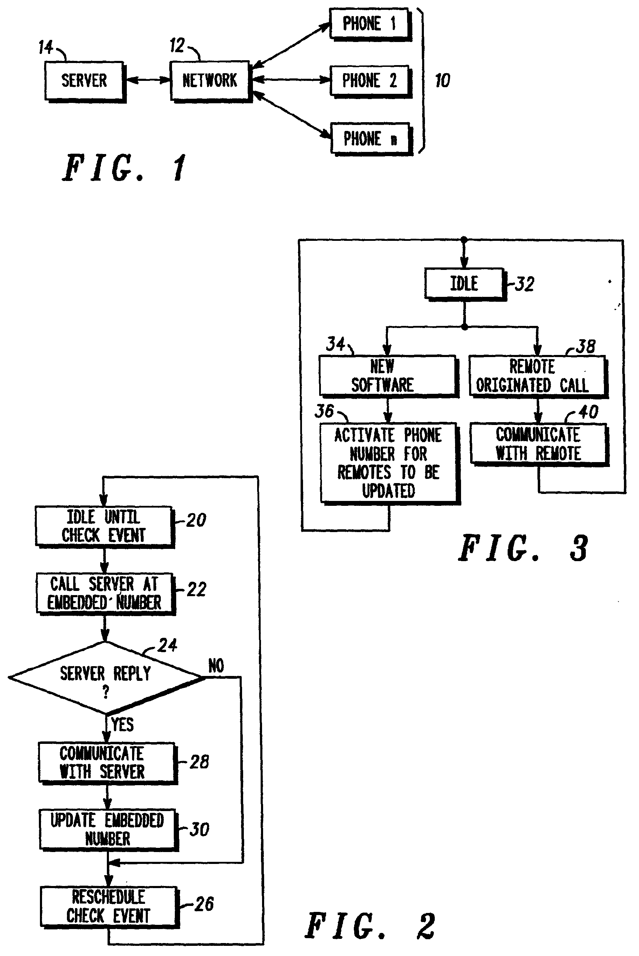

FIG. 1 shows a system in which the present invention may be used. A plurality of remote devices, in the case of this embodiment, mobile telephones 10, are connected to a network, in this case over the air to a cellular telephone network 12. In other embodiments, the remote device may be, for example, a laptop computer connected to a landline telephone network or to the internet. A server 14 comprising a computer system, perhaps maintained by the manufacturer of the remote devices (or its service representative), and containing software updates for the remote devices is accessible through the network 12. The term updates as used herein is meant to include modifications to the software of the remote device whether for the purpose of correcting errors in the software, providing improvements to the software, making corrections to the software to accommodate system changes, providing additional features to the system or telephone, providing updated data, or the like.

When the remote device is initially programmed by the manufacturer or software provider, an embedded code is placed within the software. The remote device, whether a cellular telephone, laptop, or other device periodically accesses the embedded code and uses the code to attempt to access a facility, which may be the server 14 to determine whether or not a software update is available for the remote device. The embedded code, in a preferred embodiment, is a telephone number of the server 14, but could be a different code particularly if a different system were used. While the term embedded is used herein, it is understood that the number or access code can be provided with the software into a separate register within the device rather than included actually within the code. The attempted access can be done automatically by the remote device by, for example, automatically dialing the telephone number on some schedule determined by a timer or manually by the user. For example, upon powering up the remote device, the device may check a timer. If the timer has expired, a call is automatically placed to the embedded telephone number over the cellular, landline, or other network to which the device is connected.

In the case where the remote device is a cellular telephone or a similar device having a user-related activation card or like mechanism, the software may be in the telephone or other device itself or it may be in the user-related card, such as a SIM card used in the GSM cellular telephone system. Since updates obtained in accordance with this invention are directed by the remote device rather than by the network or other component of a system, the system need not even know the location of the remote device.

The provider of the software or data for the device provides the embedded telephone number or access code in the software. For any particular version of software or level of revision, an update may or may not be available when the remote device attempts to contact the server. If no update is available, the telephone number is inactive and the call is not answered, thus there is no charge to the user for the call. If an update is available, the update is made and a new code or telephone number is provided with the update, which number will be activated only when a new update is available.

FIG. 2 is a description of the state machine in a cellular telephone in a system according to the invention. The telephone waits for the check event 20. Preferably, at power on the phone checks whether a timer time-out has occurred. If a timer is not available, some other criterion can be used such as the nth time the power is turned on. The software which contains the embedded code can also provide the check time criteria, which can thus be changed whenever an update is made.

An additional check can be made at power up to determine whether the phone is operating in its home system and allow updates only in the home system. Of course distributed update systems can be provided wherein the software can be updated in other systems as well.

If the check event has occurred, a call is placed 22 to the server at the number provided as the embedded code in the software. If the server does not reply at 24 the check event is rescheduled and the device waits again for the check event at 20. The user is not charged for the call since there was no response. In many systems, if there is no response, no charge is made. In other systems, if no response is made, there is no charge so long as the attempted access does not exceed a predetermined time. If the server does reply, communication is established with the server at 28, the software is updated at 30 and a new, as yet inactive, embedded code or telephone number is provided. The new number, of course, will be activated as soon as an update is available for the new software version. When the update is completed the check event is rescheduled at 26. Again, at this time the check procedure or schedule may be modified.

FIG. 3 is a description of the state machine in a server containing a software update in a system in accordance with the invention. The server idles at 32 waiting for some activity to occur. When a new update is available for software within a remote device the software is loaded on the server at 34. The new software includes a new embedded code or telephone number for the occasion when the new software must be updated. At 36 the telephone number or code for the existing software is activated thus allowing the server to respond to calls from remote devices containing that number within its software.

The server returns to the wait state 32 to await a call from a remote device. Upon receipt of a call from a remote device at 38, communication is established with the remote device and new software is loaded into the remote device together with the new embedded code or telephone number, not yet activated. The server then returns to the wait state 32.

While a preferred embodiment of the invention relates primarily to cellular telephones, it can be appreciated that the invention itself is applicable to devices other than telephones. For example, the invention may have applicability to vending machines or other machines or to devices for providing travel or weather information to a traveler. The operator of the server on which the software update resides could grant access to the server for a fee to others who wish to avail themselves of the updating service or another service resident on the server.

## Claims

1. A method for providing for modification of software in a remote device normally connected to a network comprising:
embedding an identifier within the software, the identifier comprising an address of an update source,
from time to time the remote device sending the embedded code over the network to the update source,
the update source being responsive if an update is available.

2. The method as set forth in claim 1 wherein the remote device is a cellular telephone and the update source is a server accessable through the cellular telephone network.

3. The method as set forth in claim 2 wherein the embedded code is a telephone number.

4. The method as set forth in claim 3 wherein the telephone number is the telephone number of a server which contains the update source.

5. The method as set forth in claim 4 wherein the remote device sends the server telephone number automatically at predetermined time intervals.

6. The method as set forth in claim 5 wherein the server responds to the remote device if an upgrade is available.

7. The method as set forth in claim 6 wherein a new embedded code representing a telephone number is included within the update and subsequent calls from the remote device are made to the new number.

8. A method for providing for modification of software in a device connected to a network upon a request by the device, comprising:
the device periodically sending a request for a software update by attempting to access an update source,
the update source being responsive if a software update is available for the device.

9. The method as set forth in claim 8 wherein the location of the device is unknown to the update source.

10. The method as set forth in claim 8 wherein the device attempts to access the update source by transmitting a predetermined code over the network.

11. The method as set forth in claim 10 wherein the predetermined code is the telephone number of a server containing the update.

12. The method as set forth in claim 11 wherein the telephone number is inactive if no update is available.

13. A method for providing updated data to a device connected to a network upon a request by the device, comprising:
the device periodically sending a request for the updated data by attempting to access a source of such data,
the source of such data being responsive if updated data is available for the device.

14. A method as set forth in claim 13 wherein the source of data responds to the device if updated data is available.

15. The method as set forth in claim 13 wherein the device attempts to access the update source by transmitting a predetermined code over the network.

16. The method as set forth in claim 15 wherein if an access is successful the updated data contains a new access code.
